Europäisches Patentamt

European Patent Office

Office européen des brevets

(19)

(11) Veröffentlichungsnummer: **0 069 369**

**A1**

(12) # EUROPÄISCHE PATENTANMELDUNG

(21) Anmeldenummer: 82105937.5

(22) Anmeldetag: 03.07.82

(51) Int. Cl.³: **B 60 K 17/10**
**B 60 K 9/00, B 60 K 7/00**

(30) Priorität: 06.07.81 US 280435

(43) Veröffentlichungstag der Anmeldung:
12.01.83 Patentblatt 83/2

(84) Benannte Vertragsstaaten:
DE FR GB

(71) Anmelder: DEERE & COMPANY
1 John Deere Road
Moline Illinois 61265(US)

(72) Erfinder: Stricker, David Keith
Rt. No 1, Box 225
Juneau, Wisconsin 53039(US)

(74) Vertreter: Gramm, Werner, Prof. Dipl.-Ing.
Patentanwälte Gramm + Lins Theodor-Heuss-Strasse 2
D-3300 Braunschweig(DE)

(54) Fahrzeug mit zweifachem hydrostatischen Fahrantrieb.

(57) Ein Fahrzeug (11) weist eine angenähert in seiner Längsmittelachse angeordnete Antriebsmaschine (17) auf, die unmittelbar einen zweifachen hydrostatischen Fahrantrieb (19 - 25) antreibt. Die beiden Pumpen (19, 21) des zweifachen hydrostatischen Fahrantriebs sind unmittelbar hinter der Antriebsmaschine (17) einander gegenüberliegend kolinear so angeordnet, daß die gemeinsame Fluchtlinie angenähert senkrecht zu einer mit der Antriebsmaschine (17) verbundenen Antriebswelle (33) verläuft, die die beiden Pumpen antreibt.

FIG. 2

DEERE & COMPANY
Moline, Illinois 61265
U.S.A.


"Fahrzeug mit zweifachem hydrostatischen Fahrantrieb"


Die Erfindung betrifft ein Fahrzeug mit einem zweifachen hydrostatischen Fahrantrieb und einer in der Längsmittelachse des Fahrzeuges angeordneten Antriebsmaschine, die über eine Drehverbindung eine erste und eine zweite Pumpe beaufschlagt, die ihrerseits mit einem ersten Motor bzw. einem zweiten Motor in Strömungsverbindung stehen, die ihrerseits unabhängig voneinander mit den Fahrzeugantriebselementen in Drehverbindung stehen.

Die Erfindung betrifft insbesondere einen Rasen- und Gartentraktor in vorzugsweise dreirädriger Bauweise. Bei einem herkömmlichen Traktor dieser Bauart ist die Antriebsmaschine üblicherweise hinten angeordnet und treibt unmittelbar oder über einen Riementrieb zwei hintereinander angeordnete Pumpen des zweifachen hydrostatischen Fahrantriebs an. Die Gesamtlänge eines derartigen Fahrzeugs wird im wesentlichen bestimmt durch das Längenmaß der Antriebsmaschine sowie der in Reihe angeordneten Pumpen. Wird das Fahrzeug parallel zu einer geneigten Oberfläche, z.B. einer Straßenböschung gefahren, führt die hintere Anordnung der Antriebsmaschine aufgrund ihres Gewichtes zu einem Ablaufen des hinteren, gelenkten Fahrzeugrades an der Böschung. Dies erschwert die Lenkung des Fahrzeuges wesentlich. Unter diesen Fahrbedingungen wäre es daher vorteilhaft, wenn die Antriebsmaschine so weit wie möglich vorn im Fahrzeug angeordnet wäre.

Bei einem dreirädrigen Grasmäher ist das Mähdeck vor dem Fahrzeug angeordnet, so daß das Gras geschnitten werden kann, bevor die Fahrzeugräder das Gras zusammendrücken. Hierdurch wird ein sauberer Mähschnitt gewährleistet, da das Mähdeck vor dem Schnitt das von den Fahrzeugrädern zusammengepreßte Gras nicht anheben muß. Eine kurze Bauweise des Fahrzeugs führt zu dem Vorteil, daß beim Wenden das Fahrzeuges das hintere gelenkte Rad innerhalb des zuvor abgemähten Bereichs läuft. Je kürzer das Fahrzeug ist, um so besser ist die von den Fronträdern des Fahrzeuges aufgebrachte Zugkraft. Hierdurch werden ein Durchdrehen der Räder und dadurch eine Beschädigung des Rasens vermindert.

Der Erfindung liegt die Aufgabe zugrunde, das eingangs erläuterte Fahrzeug hinsichtlich seiner Gesamtlänge zu verkleinern.

Diese Aufgabe wird gemäß der Erfindung durch folgende Merkmale gelöst:

a) Die beiden Pumpen sind an einer Halterung einander gegenüberliegend kolinear so befestigt, daß die gemeinsame Fluchtlinie angenähert senkrecht zur Längsmittelachse des Fahrzeugs verläuft;

b) die Antriebsmaschine treibt eine mit ihr verbundene Antriebswelle, die in der genannten Halterung drehbar gelagert ist und angenähert parallel zur genannten Längsmittelachse liegt;

- 3 -

c) zur Übertragung des von der Antriebsmaschine erzeugten Drehmomentes von der Antriebswelle auf die beiden Pumpen ist ein Getriebe vorgesehen.

Dabei ist es zweckmäßig, wenn das genannte Getriebe ein erstes, drehfest auf der Antriebswelle sitzendes Kegelrad umfaßt, das im ständigen Eingriff mit einem zweiten Kegelrad steht, das drehfest auf einer Eingangswelle der ersten Pumpe sitzt, wobei diese Eingangswelle mit einer Eingangswelle der zweiten Pumpe fluchtet, und wobei auf der Eingangswelle der zweiten Pumpe drehfest ein drittes Kegelrad sitzt, das im ständigen Eingriff mit dem ersten Kegelrad steht.

Durch die Anordnung der beiden Pumpen läßt sich die Gesamtlänge des Fahrzeuges reduzieren. Dabei kann die hinten im Fahrzeug montierte Antriebsmaschine eine am Antriebsausgang befestigte Antriebsscheibe aufweisen, in der die genannte Antriebswelle verkeilt ist, die sich durch die genannte Halterung erstreckt, die ihrerseits fest mit der Laterne der Antriebsmaschine verbunden ist. Die Antriebswelle erstreckt sich im wesentlichen entlang der Längsmittelachse der Antriebsmaschine, die sich wiederum entlang der Längsmittelachse des Fahrzeugs erstreckt. Die beiden Eingangswellen der Pumpen liegen angenähert senkrecht zur Antriebswelle.

Die beiden Pumpen werden somit über das Kegelradgetriebe unmittelbar von der Antriebsmaschine angetrieben.

Die Antriebswelle erstreckt sich über die Halterung für die beiden Pumpen hinaus. Dabei ist es zweckmäßig, wenn am freien Ende der Antriebswelle eine Kupplung für eine Zapfwelle befestigt ist, die somit unmittelbar von der Antriebsmaschine gedreht wird.

- 4 -

- 4 -

Schließlich ist es vorteilhaft, wenn eine Steuerung zur unabhängigen Verstellung der beiden Pumpen vorgesehen ist.

Zum allgemeinen Stand der Technik kann verwiesen werden auf die US-Patentschriften 3,469,381, 3,707,887, 3,810,517 und 4,090,411.

- 5 -

- 5 -

In der Zeichnung ist eine als Beispiel dienende Ausführungsform
der Erfindung dargestellt. Es zeigen:

Figur 1    in Seitenansicht einen Rasen- und Gartentraktor
           mit zweifachem hydrostatischen Fahrantrieb;

Figur 2    in vergrößerter Darstellung in Draufsicht und zum
           Teil im Horizontalschnitt Halterung und Antrieb
           der Pumpen des hydrostatischen Fahrantriebs;

Figur 3    in schematischer Darstellung eine Steuerung für
           die Pumpenverstellung;

Figur 4a in schematischer Darstellung die die Lenkung des
         Fahrzeugs bewirkende Pumpenverstellung für eine
         Rechtskurve und

Figur 4b in einer Darstellung gemäß Figur 4a die Pumpenverstellung für die Geradeausfahrt.

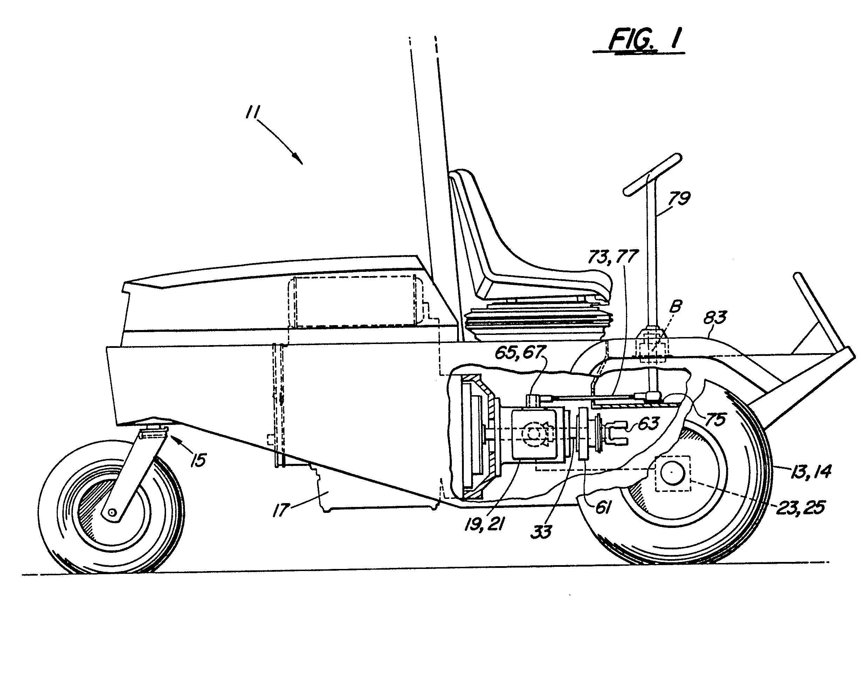

Gemäß Figur 1 weist ein dreirädriger Rasen- und Gartentraktor 11
Vorderräder 13,14 sowie ein gelenktes Hinterrad 15 auf. Eine im
hinteren Teil des Fahrzeugs angeordnete Antriebsmaschine 17
treibt eine erste Pumpe 19 sowie eine zweite Pumpe 21 eines zweifachen hydrostatischen Fahrantriebs an. Die beiden Pumpen 19,21
stehen mit einem Motor 23 bzw. einem Motor 25 in Strömungsverbindung, die ihrerseits das Vorderrad 13 bzw. 14 beaufschlagen.

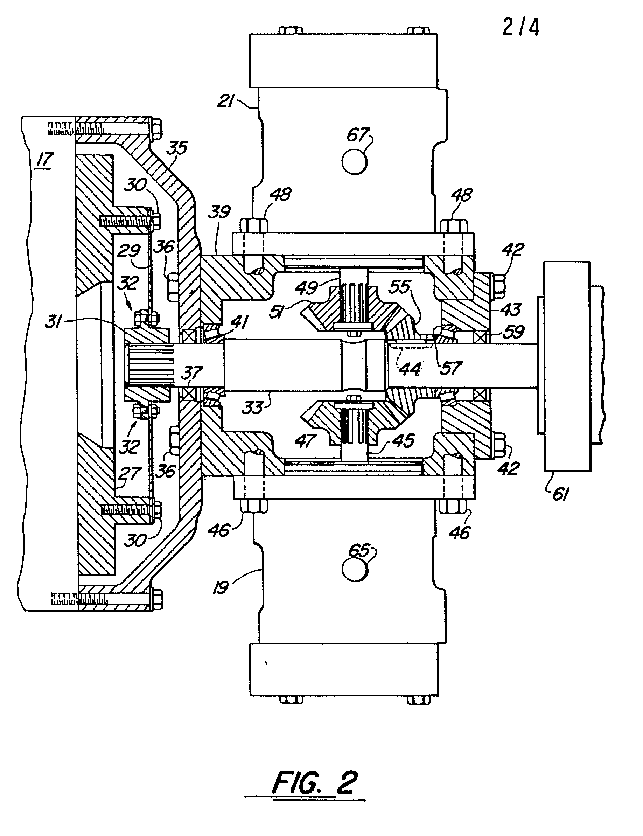

Die Figuren 1 und 2 lassen erkennen, daß die Antriebsmaschine 17
einen Antriebsflansch 27 aufweist, an dem über Bolzen 30 eine
Antriebsscheibe 29 befestigt ist. Letztere weist einen mittigen
Ring 31 auf, der über Schraubbolzen 32 mit der Antriebsscheibe 29
verbunden und mit dem einen Ende einer Antriebswelle 33 verkeilt ist. Antriebsflansch 27 und Antriebsscheibe 29 sind von einer
Laterne 35 abgedeckt, durch die sich die Antriebswelle 33 erstreckt, die gegenüber der Laterne 35 über einen Dichtungsring 37 abgedichtet ist. An der Laterne 35 ist über Schraubbolzen 36 eine Halterung 39 befestigt, durch die die Antriebswelle 33 hindurchragt, die im vorderen Teil der Halterung 39
in einem Lager 41 und in einer hinteren Stirnplatte 43 der Halterung 39 in einem Lager 57 gelagert ist, dem ein Dichtring 59
nachgeschaltet ist. Die genannte Stirnplatte 43 ist über
Schraubbolzen 42 mit der Halterung 39 verschraubt.

An der einen Seite der Halterung 39 ist über Bolzen 46 eine
erste Pumpe 19 so befestigt, daß ihre Eingangswelle 45 etwa
senkrecht zur Antriebswelle 33 liegt. Auf der gegenüberliegenden
Seite ist die zweite Pumpe 21 mit Bolzen 48 an der Halterung 39
so befestigt, daß die Eingangswelle 49 dieser zweiten Pumpe etwa
senkrecht zur Antriebswelle 33 liegt und mit der Eingangswelle 45 der ersten Pumpe 19 fluchtet. Auf der Eingangswelle 45
sitzt drehfest ein Kegelrad 47, während auf der Eingangswelle 49
ein Kegelrad 51 drehfest befestigt ist. Die beiden Kegelräder
47,51 stehen im ständigen Eingriff mit einem Kegelrad 55, das
über eine Feder 44 mit der Antriebswelle 33 verkeilt ist. Dadurch treibt die Antriebsmaschine 17 unmittelbar über die Antriebswelle 33 die beiden Pumpen 19,21 an.

An dem über die Halterung 39 hinausragenden Ende der Antriebswelle 33 ist eine Kupplung 61 befestigt, an der ein Koppler 63
befestigt sein kann. Kupplung 61 und Koppler 63 bilden eine unmittelbar von der Antriebsmaschine 17 beaufschlagte Zapfwelle,
deren Lebensdauer gegenüber herkömmlichen Anordnungen höher
liegt, bei denen die Zapfwelle von einem Riemen angetrieben wird.

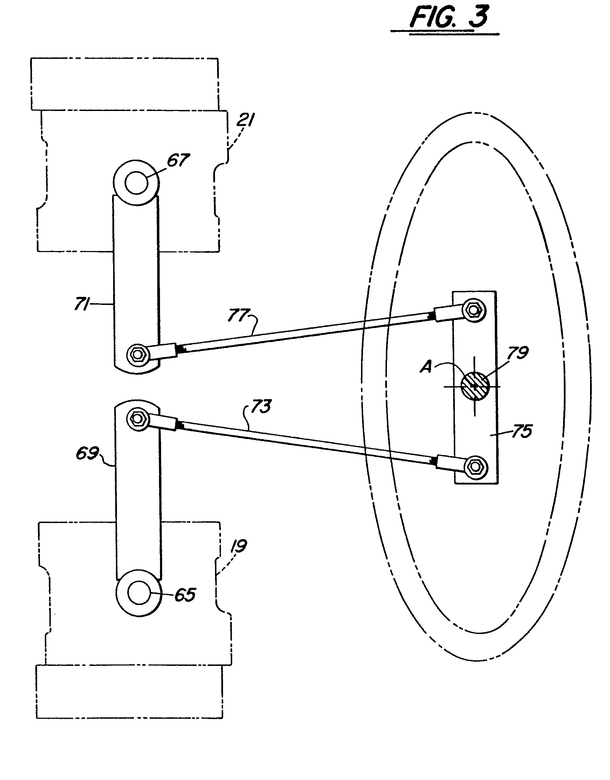

Gemäß Figur 3 weist jede Pumpe 19,21 eine Pumpenverstellwelle 65,
67 auf, über die die jeweilige Pumpe unabhängig von der anderen

- 7 -

Pumpe verstellt werden kann. Zwei Hebel 69,71 sind an der Pumpenverstellwelle 65 bzw. 67 festgelegt und nehmen in der neutralen Pumpenstellung eine nach innen ragende und miteinander fluchtende Stellung ein. An den beiden freien Enden der Hebel 69, 71 ist jeweils eine Stange 73 bzw. 77 angelenkt, die mit ihrem jeweils anderen Ende an einem Querteil 75 angelenkt sind. In der Mitte dieses Querteils 75 ist senkrecht hierzu eine mit einem Handgriff versehene Lenksäule 79 befestigt, die in den Bereich des Fahrersitzes ragt (siehe Figur 1). Diese Lenksäule 79 ist an der Fahrzeugkarosserie so befestigt, daß sie um einen Punkt B in und entgegen Fahrtrichtung verschwenkt und um eine Mittelachse A verdreht werden kann.

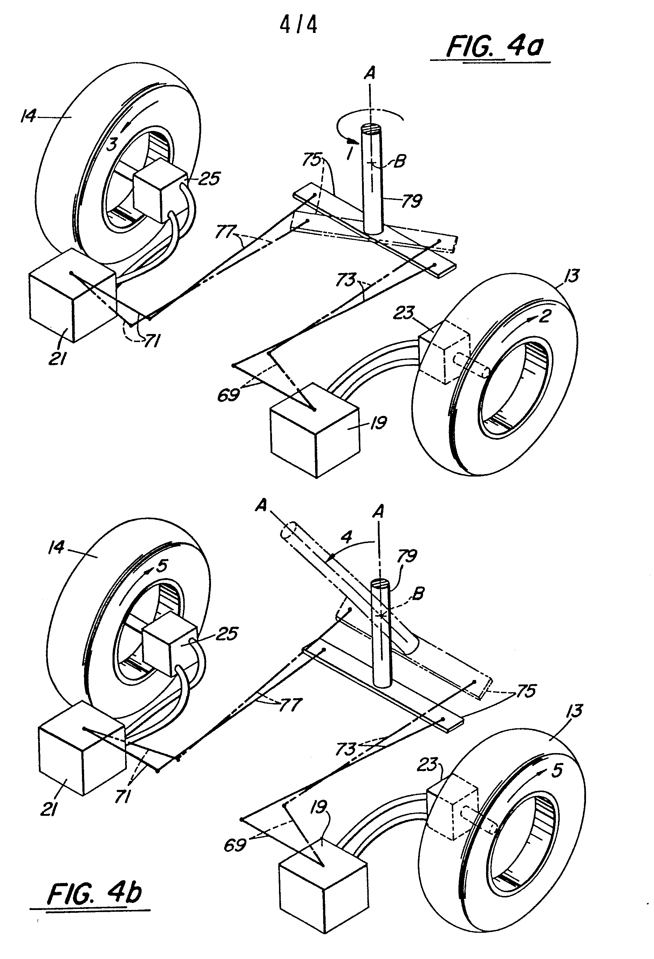

Die Figuren 4a und 4b lassen erkennen, daß eine Verdrehung der Lenksäule 79 in Richtung des Pfeiles 1 zu einer Verschwenkung des Querteils 75 um die Mittelachse A führt, wodurch die Übertragungsgestänge für die Pumpen 19,21 aus ihrer Neutralstellung in entgegengesetzte Richtungen verschoben werden. Hierdurch werden die Räder 13,14 über die Motoren 23,25 in entgegengesetzten Richtungen angetrieben, wie die Pfeile 2,3 andeuten. Entsprechend Figur 4b führt eine Verschwenkung der Lenksäule 79 nach hinten in Richtung des Pfeiles 4 zu einer Verschiebung der genannten Gestänge in gleicher Richtung um einen jeweils gleichen Betrag, so daß die Räder 13,14 gemäß Pfeil 5 in gleicher Richtung drehen.

Durch die vorstehend beschriebene Ausbildung ist es möglich, die Antriebsmaschine 17 dichter an die Vorderräder 13,14 heranzubringen und dadurch die Manövrierfähigkeit des Fahrzeugs zu verbessern. Außerdem kann ein frontseitig angebautes Mähwerk unmittelbar von der Antriebswelle 33 angetrieben werden.

Gr/Gru.

DEERE & COMPANY
Moline, Illinois 61265
U.S.A.


Patentansprüche:


1. Fahrzeug (11) mit einem zweifachen hydrostatischen Fahrantrieb (19-25) und einer in der Längsmittelachse des
   Fahrzeuges angeordneten Antriebsmaschine (17), die über
   eine Drehverbindung (33-55) eine erste und eine zweite
   Pumpe (19,21) beaufschlagt, die ihrerseits mit einem
   ersten Motor (23) bzw. einem zweiten Motor (25) in Strömungsverbindung stehen, die ihrerseits unabhängig voneinander mit den Fahrzeugantriebselementen (13,14) in Drehverbindung stehen, g e k e n n z e i c h n e t  durch
   folgende Merkmale:

   a) Die beiden Pumpen (19,21) sind an einer Halterung (39)
      einander gegenüberliegend kolinear so befestigt, daß
      die gemeinsame Fluchtlinie angenähert senkrecht zur
      Längsmittelachse des Fahrzeugs (11) verläuft;

   b) die Antriebsmaschine (17) treibt eine mit ihr verbundene
      Antriebswelle (33), die in der genannten Halterung (39)
      drehbar gelagert ist und angenähert parallel zur genann-
      ten Längsmittelachse liegt;

- 2 -

c) zur Übertragung des von der Antriebsmaschine (17) erzeugten Drehmomentes von der Antriebswelle (33) auf die beiden Pumpen (19,21) ist ein Getriebe (47 - 55) vorgesehen.

2. Fahrzeug nach Anspruch 1, dadurch gekennzeichnet, daß das genannte Getriebe (47 - 55) ein erstes, drehfest auf der Antriebswelle (33) sitzendes Kegelrad (55) umfaßt, das im ständigen Eingriff mit einem zweiten Kegelrad (47) steht, das drehfest auf einer Eingangswelle (45) der ersten Pumpe (19) sitzt, wobei diese Eingangswelle (45) mit einer Eingangswelle (49) der zweiten Pumpe (21) fluchtet.

3. Fahrzeug nach Anspruch 2, dadurch gekennzeichnet, daß auf der Eingangswelle (49) der zweiten Pumpe (21) drehfest ein drittes Kegelrad (51) sitzt, das im ständigen Eingriff mit dem ersten Kegelrad (55) steht.

4. Fahrzeug nach Anspruch 1, 2 oder 3, dadurch gekennzeichnet, daß am freien Ende der genannten Antriebswelle (33) eine Kupplung (63) für eine Zapfwelle befestigt ist.

5. Fahrzeug nach einem der vorhergehenden Ansprüche, gekennzeichnet durch eine Steuerung (69 - 79) zur unabhängigen Verstellung der beiden Pumpen (19,21).

Gr/Gru.

FIG. 1

1/4

FIG. 2

_FIG. 3_

*FIG. 4a*

*FIG. 4b*

Europäisches Patentamt

EUROPÄISCHER RECHERCHENBERICHT

0069369
Nummer der Anmeldung

EP 82105937.5

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| D,X | US - A - 3 810 517 (HURLBURT)<br>* Fig. 3; Spalte 4, Zeilen 3-25 *<br>-- | 1 | B 60 K 17/10<br>B 60 K 9/00<br>B 60 K 7/00 |
| A | FR - A - 1 503 420 (ZAHNRADFABRIK FRIEDRICHSHAFEN AG)<br>* Fig. 3; Seite 2, Spalte 2, 1. Absatz *<br>-- | 1,5 | |
| D,A | US - A - 4 090 411 (ALBRIGHT)<br>* Zusammenfassung; Ansprüche *<br>-- | 5 | RECHERCHIERTE SACHGEBIETE (Int Cl.³) |
| A | EP - A1 - 0 012 902 (AUTOHEINEN)<br>-- | | B 60 K |
| A | DE - A1 - 2 947 552 (K.K. SOMATSU SEISAKUSHO)<br>---- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 21-09-1982 | DENK |

EPA form 1503.1 06.78